# FASCICULE DE BREVET EUROPEEN

(11) **EP 2 879 872 B1**
(45) Date de publication et mention de la délivrance du brevet: **06.09.2017**
(21) Numéro de dépôt: 13741741.6
(22) Date de dépôt: 24.07.2013
(51) Int. Cl.: B32B 25/14, B32B 25/16, B32B 27/30, B60C 1/00, C08L 53/00

(54) **STRATIFIE MULTICOUCHE POUR PNEUMATIQUE**
MEHRSCHICHTFOLIE FÜR REIFEN
MULTILAYER LAMINATE FOR TYRES

(30) Priorité: 30.07.2012 FR 1257366
(43) Date de publication de la demande: 10.06.2015
(73) Titulaire: Compagnie Générale des Etablissements Michelin, 63000 Clermont-Ferrand (FR)
(72) Inventeur: CUSTODERO, Emmanuel, F-63040 Clermont-Ferrand Cedex 9 (FR); GREIVELDINGER, Marc, F-63040 Clermont-Ferrand Cedex 9 (FR); GAUTHIER, Catherine, F-63040 Clermont-Ferrand Cedex 9 (FR)
(74) Mandataire: Sidhu, Alban
(86) Numéro de dépôt international: PCT/EP2013/065635
(87) Numéro de publication internationale: WO 2014/019915

(56) Documents cités:
- EP-A1- 1 987 962
- EP-A1- 2 404 766
- FR-A1- 2 939 076

## Description

La présente invention est relative aux stratifiés pour pneumatiques comportant une composition dont les élastomères sont majoritairement des élastomères thermoplastiques (TPE), dans une de leurs couches élastomériques.

Dans un pneumatique conventionnel les différentes couches élastomériques sont constituées de compositions d'élastomères diéniques, adhérant les unes aux autres par les liaisons créées lors de la réticulation desdits élastomères. Ces couches doivent donc être associées avant la cuisson (ou la réticulation) afin de permettre leur adhésion.

Il est d'intérêt aujourd'hui pour les fabricants de pneumatique, d'utiliser des couches élastomériques comprenant, à titre d'élastomères, majoritairement des élastomères thermoplastiques (TPE) afin de bénéficier des propriétés de ces élastomères, notamment pour la réduction de la résistance au roulement et la facilité de mise en oeuvre.

La difficulté de l'utilisation de telles couches, dont les élastomères sont majoritairement des TPE, est leur adhésion aux couches diéniques adjacentes de composition conventionnelle, et ce, avant la cuisson du stratifié résultant ou après la cuisson de la couche adjacente à la couche dont les élastomères sont majoritairement des TPE.

Afin d'améliorer cette adhésion, les demanderesses ont précédemment décrit des stratifiés pour pneumatique comportant une couche dont les élastomères sont majoritairement des élastomères thermoplastiques (TPE), par exemple dans le document WO2010/063427. Dans ce document, la couche majoritairement composée de TPE, peut adhérer à une couche diénique par la présence d'une couche adhésive spécifique intermédiaire. S'il est efficace, le stratifié résultant ajoute une couche supplémentaire dans la structure du pneumatique, ce qui l'alourdit et ajoute une étape dans sa fabrication.

Dans le but d'améliorer les pneumatiques conventionnels par l'utilisation d'une couche majoritairement à base d'un élastomère TPE, tout en simplifiant l'adhésion d'une telle couche à une couche diénique adjacente, réticulée ou non réticulée, la demanderesse a trouvé de manière surprenante le stratifié de l'invention.

L'invention a donc pour objet un stratifié élastomérique pour pneumatique, ledit stratifié comportant au moins deux couches adjacentes d'élastomère :
∘ une première couche, constituée d'une composition à base d'au moins un élastomère thermoplastique (TPE), le taux d'élastomère thermoplastique étant compris dans un domaine allant de plus de 50 à 100 pce (parties en poids pour 100 parties en poids d'élastomère) ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce ;
étant entendu qu'au moins 5 pce des élastomères thermoplastiques présents dans la deuxième couche sont compatibles avec au moins 5 pce des élastomères présents dans la première couche.

Cette compatibilité permet d'avoir une adhésion satisfaisante entre les deux couches du stratifié multicouche de l'invention. Par rapport aux solutions de l'art antérieur, l'invention est d'une grande simplicité puisqu'elle permet de s'affranchir d'une couche dont la seule fonction serait l'adhésion de la couche TPE sur la couche diénique et ainsi de ne pas alourdir le pneumatique et donc de ne pas augmenter sa résistance au roulement.

Un autre avantage majeur de l'invention est de permettre une économie de matériaux puisque qu'au lieu d'utiliser une couche élastomérique supplémentaire pour l'adhésion, l'invention permet à une couche majoritairement diénique (comme les compositions des pneumatiques conventionnels) d'adhérer à une couche thermoplastique. Cette économie est par ailleurs très favorable à la préservation de l'environnement.

De préférence, l'invention concerne un stratifié tel que défini ci-dessus, dans lequel la masse moléculaire moyenne en nombre des élastomères thermoplastiques est comprise entre 30 000 et 500 000 g/mol.

De préférence également, l'invention concerne un stratifié tel que défini ci-dessus, dans lequel les blocs élastomères des élastomères thermoplastiques sont choisis parmi les élastomères ayant une température de transition vitreuse inférieure à 25°C.

Préférentiellement, l'invention concerne un stratifié tel que défini ci-dessus, dans lequel les blocs élastomères des élastomères thermoplastiques sont choisis dans le groupe constitué par les élastomères éthyléniques, les élastomères diéniques et leurs mélanges. Selon un mode préférentiel, les blocs élastomères des élastomères thermoplastiques sont choisis parmi les élastomères éthyléniques. Selon un autre mode préférentiel, les blocs élastomères des élastomères thermoplastiques sont choisis parmi les élastomères diéniques, et plus préférentiellement, des élastomères diéniques issus de l'isoprène, du butadiène ou d'un mélange de ces derniers.

Préférentiellement également, l'invention concerne un stratifié tel que défini ci-dessus, dans lequel les blocs thermoplastiques des élastomères thermoplastiques sont choisis parmi les polymères ayant une température de transition vitreuse supérieure à 60°C et, dans le cas d'un bloc thermoplastique semi cristallin, une température de fusion supérieure à 60°C. Plus préférentiellement, les blocs thermoplastiques des élastomères thermoplastiques sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges. Plus préférentiellement encore, les blocs thermoplastiques des élastomères thermoplastiques sont choisis parmi les polystyrènes. De manière encore plus préférentielle, les élastomères thermoplastiques (TPE) comportent entre 5 et 50% en masse de styrène.

De préférence, l'invention concerne un stratifié tel que défini ci-dessus, dans lequel les élastomères thermoplastiques sont choisis dans le groupe constitué par les élastomères thermoplastiques copolymères styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS), styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS), styrène/ butadiène/ butylène (SBB), styrène/ butadiène/ butylène/ styrène (SBBS) et les mélanges de ces copolymères.

Préférentiellement, l'invention concerne un stratifié tel que défini ci-dessus, dans lequel le taux d'élastomère thermoplastique (TPE) dans la composition de la première couche est compris dans un domaine allant de 70 à 100 pce, et plus préférentiellement, de 80 à 100 pce. Plus préférentiellement encore, l'élastomère thermoplastique est le seul élastomère de la première couche.

Plus préférentiellement, l'invention concerne un stratifié tel que défini ci-dessus, dans lequel la première couche ne contient pas de système de réticulation.

De manière préférentielle, l'invention concerne un stratifié tel que défini ci-dessus, dans lequel le taux d'élastomère thermoplastique (TPE) dans la composition de la deuxième couche est compris dans un domaine allant de 5 à 45 pce, plus préférentiellement, de 10 à 40 pce.

Préférentiellement, l'invention concerne un stratifié tel que défini ci-dessus, dans lequel l'élastomère diénique de la deuxième couche est choisi dans le groupe constitué par les élastomères diéniques essentiellement insaturés, et les mélanges de ces élastomères. Plus préférentiellement, l'élastomère diénique est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Encore plus préférentiellement, l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

De manière préférentielle, l'invention concerne un stratifié tel que défini ci-dessus, dans lequel la deuxième couche comprend une charge renforçante. Préférentiellement, la charge renforçante est du noir de carbone et/ou de la silice. Plus préférentiellement, la charge renforçante majoritaire est un noir de carbone.

L'invention concerne également un pneumatique comportant un stratifié tel que défini ci-dessus.

De plus, l'invention concerne également l'utilisation dans un objet pneumatique d'un stratifié tel que défini ci-dessus.

L'invention concerne plus particulièrement les stratifiés tels que définis ci-dessus, utilisés dans des pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et diéniques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Pour les besoins de la présente invention, il est précisé que dans la présente demande de brevet, on dénomme « couche thermoplastique » une couche élastomérique comprenant, en poids, une plus grande quantité d'élastomère(s) thermoplastique(s) que d'élastomère(s) diénique(s) ; et on dénomme « couche diénique » une couche élastomérique comprenant, en poids, une plus grande quantité d'élastomère(s) diénique(s) que d'élastomère(s) thermoplastique(s).

Le stratifié selon l'invention présente une excellente adhésion entre les deux couches, dénommées pour le besoin de clarté de l'invention première et deuxième couches (ou respectivement, couche thermoplastique et couche diénique). Ainsi, selon l'invention, une couche thermoplastique telle que définie ci-dessus peut adhérer avec une couche diénique telle que définie ci-dessus, grâce à la présence d'une certaine quantité de TPE dans cette couche diénique, compatible avec une certaine quantité de TPE dans la couche thermoplastique.

Au sens de la présente invention, des élastomères thermoplastiques sont compatibles, lorsqu'ils présentent, en mélange (de ces deux élastomères thermoplastiques entre eux), une température de transition vitreuse ou, dans le cas de blocs thermoplastiques semi cristallins, une température de fusion unique pour la partie thermoplastique du mélange.

Les détails de l'invention seront explicités ci-dessous, par la description dans un premier temps, des constituants communs éventuels des deux couches du stratifié de l'invention puis, dans un deuxième temps, par la description des éléments spécifiques de chacune des couches du stratifié de l'invention, et enfin par la description de l'adhésion entre les deux couches du stratifié selon l'invention.

### I- Constituants communs possibles des couches du stratifié multicouche

Le stratifié multicouche selon l'invention a pour caractéristique essentielle d'être pourvu d'au moins deux couches élastomériques dites « couche thermoplastique » et « couche diénique » de formulations différentes, lesdites couches dudit stratifié multicouche comprenant au moins un élastomère thermoplastique tel que défini ci-après. En plus du TPE, au moins la couche diénique comprend également un élastomère diénique tel que défini ci-après.

En plus des élastomères, les couches du stratifié multicouche de l'invention peuvent comprendre d'autres composants, non essentiels, et préférentiellement présents ou non, parmi lesquels on peut citer notamment ceux qui sont présentés ci-dessous, avec les élastomères discutés précédemment.

### I-1. Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

### I-1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour stratifié multicouche de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances du stratifié multicouche lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 60°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### I-1.2. Nature des blocs élastomères

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes, tels que les blocs polyisobutylène, polybutylène, polyéthylène, polypropylène ou encore tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en stratifié multicouche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

### I-1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 60°C et constitué(s) à partir de monomères polymérisés. Préférentiellement, ce bloc thermoplastique a une Tg (ou Tf, le cas échéant) comprise dans un domaine variant de 60°C à 250°C. De préférence, la Tg (ou Tf, le cas échéant) de ce bloc thermoplastique est préférentiellement de 70°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 60°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 60°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 60°C.

Les blocs thermoplastiques ayant une Tg (ou Tf, le cas échéant) supérieure ou égale à 60°C peuvent être constitués à partir de monomères polymérisés de diverses natures, notamment, ils peuvent constituer les blocs suivants ou leurs mélanges :
- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 60°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité du stratifié multicouche peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en stratifié multicouche de pneumatique.

Le bloc thermoplastique peut également être constitué de plusieurs blocs thermoplastiques tels que définis ci-dessus.

### I-1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein des couches du stratifié multicouche selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### I-1.5. Quantité de TPE

Il a déjà été indiqué que les quantités de TPE varie selon la couche du stratifié selon l'invention. Dans au moins une couche, la quantité de TPE, de plus de 50 pce, est supérieure à la quantité d'élastomères diéniques (couche thermoplastique) et dans au moins une couche, c'est l'inverse : la couche diénique comprend plus de 50 pce d'élastomère(s) diénique(s). Les quantités plus précises et préférentielles de TPE dans chacune des couches seront explicitées plus loin avec les spécificités de chacune des couches du stratifié de l'invention.

### 1-2 Elastomère Diénique

Le ou les élastomères thermoplastiques décrits précédemment sont suffisants à eux seuls pour que soit utilisable la couche thermoplastique du stratifié multicouche selon l'invention, cependant, des élastomères diéniques peuvent être utilisés dans cette couche thermoplastique, et pour ce qui est de la couche diénique, cette dernière comprend plus d'élastomère(s) diénique(s) que d'élastomère(s) thermoplastique(s).

Ainsi, le stratifié multicouche selon l'invention, comporte au moins un (c'est-à-dire un ou plusieurs) élastomère diénique, pouvant être utilisé seul, ou en coupage avec au moins un (c'est-à-dire un ou plusieurs) autre élastomère (ou caoutchouc) diénique.

Le taux d'élastomère diénique, optionnel ou non dans chacune des couches du stratifié de l'invention sera explicité plus loin avec les spécificités de chacune des couches du stratifié de l'invention.

Par élastomère ou caoutchouc « diénique », doit être compris de manière connue un (on entend un ou plusieurs) élastomère issu au moins en partie (i.e. un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment fhexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication du stratifié multicouche selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1-3. Charges nanométriques (ou renforçantes) et micrométriques (ou non renforçantes)

Les élastomères décrits précédemment sont suffisants à eux seuls pour que soit utilisable le stratifié multicouche selon l'invention, néanmoins une charge renforçante peut être utilisée dans la composition, et notamment dans la couche diénique du stratifié de l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

De la même manière, la composition des couches du stratifié multicouche de l'invention, peut contenir une ou plusieurs charges micrométriques, dites « non renforçantes » ou inertes, telles que les charges lamellaires connues de l'homme de l'art.

### 1-4. Additifs divers

Le stratifié multicouche de l'invention peut comporter par ailleurs les divers additifs usuellement présents dans les couches élastomériques de pneumatique connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure du pneumatique. De manière préférentielle, la couche thermoplastique du stratifié multicouche ne contient pas tous ces additifs en même temps et de préférentiellement dans certains cas, le stratifié multicouche ne contient aucun de ces agents.

Egalement et à titre optionnel, la composition des couches du stratifié multicouche de l'invention peut contenir un système de réticulation connu de l'homme du métier. Préférentiellement, la composition ne contient pas de système de réticulation.

Optionnellement également, la composition des couches du stratifié multicouche de l'invention peut contenir un agent plastifiant, tel qu'une huile d'extension (ou huile plastifiante) ou une résine plastifiante dont la fonction est de faciliter la mise en oeuvre de le stratifié multicouche, particulièrement son intégration au pneumatique par un abaissement du module et une augmentation du pouvoir tackifiant.

Outre les élastomères précédemment décrits, les compositions du stratifié multicouche peuvent aussi comporter, toujours selon une fraction pondérale minoritaire par rapport à l'élastomère blocs, un ou plusieurs polymères thermoplastiques (non élastomériques), tels que ceux à base de polyéther.

### II- Stratifié multicouche

Comme indiqué précédemment, le stratifié multicouches de l'invention a donc pour caractéristique essentielle de comporter au moins deux couches adjacentes d'élastomère :
∘ une première couche, constituée d'une composition à base d'au moins un élastomère thermoplastique (TPE), le taux d'élastomère thermoplastique étant compris dans un domaine allant de plus de 50 à 100 pce (parties en poids pour 100 parties en poids d'élastomère) ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce ;
étant entendu qu'au moins 5 pce des élastomères thermoplastiques présents dans la deuxième couche sont compatibles avec au moins 5 pce des élastomères présents dans la première couche.

### II-1. Première couche ou couche thermoplastique

A titre de première couche, thermoplastique, est utilisée une composition élastomérique comportant plus de 50 pce d'élastomère TPE tel que défini précédemment, avec toute les préférences de structure, de nature chimique des blocs thermoplastiques et élastomériques exprimées précédemment.

La couche thermoplastique décrite ci-dessus pourrait éventuellement comporter d'autres élastomères que les TPE, les élastomères diéniques, dans une quantité minoritaire (au plus 50 pce). De tels élastomères diéniques sont définis ci-dessus, et la composition de la couche thermoplastiques peut éventuellement et de manière préférentielle comprendre également d'autres composants tels que ceux présentés ci-dessus et communs avec la deuxième couche du stratifié de l'invention.

De préférence, le taux de TPE dans la première couche est compris dans un domaine allant de 70 à 100 pce, en particulier compris dans un domaine allant de 80 à 100 pce.

Toutefois, selon un mode de réalisation particulièrement préférentiel, le ou les TPE, sont les seuls élastomères présents dans la couche thermoplastique ; en conséquence, dans un tel cas, à un taux égal à 100 pce.

### II-2. Deuxième couche ou couche diénique

A titre de deuxième couche est utilisée, en combinaison avec la première couche, une composition élastomère dont la caractéristique essentielle est de comporter une quantité variant de 5 à moins de 50 pce de TPE, en remplacement d'une partie de l'élastomère diénique. Ainsi, le taux d'élastomère diénique dans cette deuxième couche est compris entre 50 et 95 pce. En dessous du taux minimum de TPE, l'effet adhésif n'est pas suffisant tandis qu'au-delà du maximum préconisé, les propriétés de la couche diénique sont trop altérées par la forte présence de TPE.

Selon un autre mode de réalisation préférentiel de l'invention, le taux de TPE (c'est-à-dire le taux total s'il y a plusieurs TPE) est compris dans un domaine variant de 5 à 45 pce, plus préférentiellement de 10 à 40 pce. Par conséquent, le taux d'élastomère diénique (c'est-à-dire le taux total s'il y en a plusieurs) est préférentiellement compris dans un domaine allant de 55 à 95 pce et plus préférentiellement de 60 à 90 pce.

### III- Adhésion des deux couches du stratifié

On a constaté que l'adhésion de la première couche à la deuxième couche dans le stratifié de l'invention, est nettement améliorée par rapport à l'adhésion d'une couche du type de la première couche du stratifié de l'invention à une couche diénique conventionnelle (c'est à dire dépourvue d'élastomère thermoplastique).

Cette adhésion s'exprime par la compatibilité des TPE présents dans les couches du stratifié de l'invention. Ainsi, pour les besoin de l'invention, il est essentiel qu'au moins 5 pce (et plus préférentiellement encore 10 pce) des élastomères thermoplastiques présents dans la deuxième couche soient compatibles avec au moins 5 pce des élastomères présents dans la première couche. Comme indiqué précédemment, des élastomères thermoplastiques sont compatibles, lorsqu'ils présentent, en mélange (de ces élastomères thermoplastiques entre eux), une température de transition vitreuse ou, dans le cas de blocs thermoplastiques semi cristallins, une température de fusion unique pour la partie thermoplastique du mélange.

De préférence, au moins 5 pce (et plus préférentiellement encore 10 pce) des élastomères thermoplastiques présents dans la deuxième couche sont compatibles avec au moins 20 pce des élastomères présents dans la première couche, et plus préférentiellement, au moins 5 pce (et plus préférentiellement encore 10 pce) des élastomères thermoplastiques présents dans la deuxième couche sont compatibles avec au moins 50 pce des élastomères présents dans la première couche.

Plus préférentiellement, au moins 5 pce (et plus préférentiellement encore 10 pce) des élastomères thermoplastiques présents dans la deuxième couche sont de la même nature chimique qu'au moins 5 pce des élastomères présents dans la première couche. Des TPE sont de même nature chimique s'ils comprennent des blocs thermoplastiques comportant les mêmes fonctions chimiques (polystyrènes, polyamides...). De préférence, au moins 5 pce (et plus préférentiellement encore 10 pce) des élastomères thermoplastiques présents dans la deuxième couche sont de la même nature chimique qu'au moins 20 pce des élastomères présents dans la première couche, et plus préférentiellement encore, au moins 5 pce (et plus préférentiellement encore 10 pce) des élastomères thermoplastiques présents dans la deuxième couche sont de la même nature chimique qu'au moins 50 pce des élastomères présents dans la première couche.

De manière très préférentielle, au moins 5 pce (et plus préférentiellement encore 10 pce) des élastomères thermoplastiques présents dans la deuxième couche ont des blocs thermoplastiques identiques aux blocs thermoplastiques d'au moins 5 pce des élastomères présents dans la première couche. Préférentiellement, au moins 5 pce (et plus préférentiellement encore 10 pce) des élastomères thermoplastiques présents dans la deuxième couche ont des blocs thermoplastiques identiques aux blocs thermoplastiques d'au moins 20 pce des élastomères présents dans la première couche, et plus préférentiellement, au moins 5 pce (et plus préférentiellement encore 10 pce) des élastomères thermoplastiques présents dans la deuxième couche ont des blocs thermoplastiques identiques aux blocs thermoplastiques d'au moins 50 pce des élastomères présents dans la première couche.

### IV- Utilisation du stratifié dans un pneumatique

Le stratifié de l'invention peut être utilisé dans tout type de pneumatique. Il est particulièrement bien adapté à une utilisation dans un pneumatique, produit fini de pneumatique ou semi-fini de pneumatique, en caoutchouc, tout particulièrement dans un bandage pneumatique pour véhicule automobile tel qu'un véhicule de type deux roues, tourisme ou industriel, ou non automobile tel que vélo.

Le stratifié de l'invention peut être fabriqué en associant les couches du stratifié avant la cuisson, ou même après la cuisson. Plus précisément, la couche thermoplastique ne nécessitant pas de cuisson, elle peut être associée à la couche diénique du stratifié de l'invention avant ou après la cuisson de cette couche diénique, qui elle nécessite une cuisson avant d'être utilisée en pneumatique.

Le stratifié multicouche de l'invention est avantageusement utilisable dans les bandages pneumatiques de tous types de véhicules, en particulier dans les bandages pour véhicules tourisme susceptibles de rouler à très haute vitesse ou les bandages pour véhicules industriels tels que poids-lourd.

### V. Préparation du stratifié

Le stratifié multicouche de l'invention est préparé selon les méthodes connues de l'homme de l'art, en préparant séparément les deux couches du stratifié, puis en associant la couche thermoplastique à la couche diénique, avant ou après la cuisson de cette dernière. L'association de la couche thermoplastique à la couche diénique peut se faire sous l'action de chaleur et éventuellement de pression

### V-1. Préparation de la couche thermoplastique

La couche thermoplastique du stratifié multicouche de l'invention est préparée de façon classique, par exemple, par incorporation des différents composants dans une extrudeuse bi-vis, de façon à réaliser la fusion de la matrice et une incorporation de tous les ingrédients, puis utilisation d'une filière plate permettant de réaliser la couche thermoplastique. Plus généralement, la mise en forme du TPE peut être faite par toute méthode connue de l'homme du métier : extrusion, calandrage, extrusion soufflage, injection, cast film.

### V-2. Préparation de la couche diénique

La couche diénique du stratifié multicouche de l'invention est préparée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, tels que les élastomères TPE, les éventuelles charges, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une couche dénommée dans la présente invention couche diénique.

### V-3. Préparation du stratifié

Le stratifié multicouche de l'invention est préparé par association de la couche thermoplastique à la couche diénique, avant ou après cuisson de cette dernière. Avant cuisson, cela consiste à poser la couche thermoplastique sur la couche diénique pour former le stratifié de l'invention puis procéder à la cuisson du stratifié ou du pneumatique muni dudit stratifié. Après cuisson, la couche thermoplastique est déposée sur la couche de diénique déjà cuite. Pour que l'adhésion puisse s'établir, il faut une température à l'interface supérieure à la température de mise en oeuvre du TPE, elle-même supérieure à la température de transition vitreuse (Tg) et, dans le cas d'un bloc thermoplastique semi cristallin, à la température de fusion (Tf) dudit TPE, éventuellement associée à l'application de pression.

### VI- Exemples

### VI-1. Préparation des exemples

Les exemples de stratifié multicouche de l'invention sont préparés comme indiqué précédemment.

### VI-2. Description des tests utilisés

Les exemples de stratifié multicouche de l'invention sont testés quant à l'adhésion de la couche thermoplastique à la couche diénique selon un test dit de pelage.

Les éprouvettes de pelage sont réalisées par mise en contact des deux couches du stratifié, chacune des couches étant renforcée par un tissu (de façon à limiter la déformation desdites couches sous traction). Une amorce de rupture est insérée entre les deux couches.

Selon que l'on évalue l'adhésion avant ou après cuisson, le mélange de la couche diénique est respectivement cuit au préalable (180°C pendant 10 minutes) ou non cuit. Dans tous les cas, l'éprouvette de stratifié une fois assemblé est porté à 180°C sous pression pendant 10 minutes. Des bandes de 30 mm de largeur ont été découpées au massicot. Les deux côtés de l'amorce de rupture ont été ensuite placées dans les mors d'un machine de traction de marque Intron^{®}. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Les performances des exemples sont normées par rapport au témoin (base 100).

### VI-3. Exemples de stratifié

### VI-3-1. Exemple 1

Dans un premier temps, une composition thermoplastique de stratifié multicouche, et diverses couches diéniques ont été préparées, assemblées avant cuisson et testées comme indiqué précédemment, les compositions sont présentés dans les tableaux 1A et 1B ci-dessous tandis que leurs associations et les résultats d'adhésion sont présentés dans le tableau 2 ci-dessous.

Les résultats présentés au tableau 2 mettent en évidence les excellents résultats en adhésion du stratifié selon l'invention, comparé à une situation dans laquelle la couche thermoplastique est associée à une couche diénique conventionnelle (c'est-à-dire ne comprenant pas du tout de TPE dans sa composition). On note aussi que l'adhésion du stratifié est du même niveau que l'adhésion d'un stratifié de deux couches thermoplastiques représenté par la combinaison de A1 avec B5.

**Tableau 1A**

| Composition thermoplastique | A1 |
|---|---|
| SIBS 102T -KANEKA- (pce) | 100 |
| Huile PIB H1200 -INEOS- (pce) | 65 |
| Charge lamellaire SYA21R - YAMAGUSHI (pce) | 28 |
| Charge lamellaire SYA21R - YAMAGUSHI (%volumique) | 5 |

**Tableau 1B**

| Composition diénique: | B1 | B2 | B3 | B4 | B5 |
|---|---|---|---|---|---|
| NR (1) | 55 | 38 | 38 | 42 | 24 |
| BR (2) | 20 | 14 | 14 | 28 | 16 |
| SBR (3) | 25 | 16 | 16 | 0 | 0 |
| SIS (4) | 0 | 32 | 0 | 0 | 0 |
| SEBS (5) | 0 | 0 | 32 | 0 | 0 |
| SIBS (6) | 0 | 0 | 0 | 30 | 60 |
| Noir de carbone (7) | 42 | 42 | 42 | 60 | 60 |
| Plastifiant (8) | 14 | 14 | 14 | 0 | 0 |
| Antioxydant (9) | 1,5 | 1,5 | 1,5 | 1,5 | 1,5 |
| Acide stéarique | 1 | 1 | 1 | 0,5 | 0,5 |
| ZnO | 3 | 3 | 3 | 3 | 3 |
| Soufre | 2 | 2 | 2 | 2,5 | 2,5 |
| Accélérateur (10) | 1 | 1 | 1 | 1,5 | 1,5 |

| | | | | | |
|---|---|---|---|---|---|
| (1) NR caoutchouc naturel (2) BR polybutadiène avec 4% de motif 1,2 et 93% de 1,4-cis (Tg= -106°C) (3) SBR solution copolymère de styrène et de butadiène avec 25% de motifs styrène et 48% de modifs 1,2 de la partie butadiène (Tg de -48°C) (4) SIS «D1161» commercialisé par Kraton (5) SEBS « G1654 » commercialisé par Kraton (6) SIBS « Sibstar 102 T» commercialisé par la société Kaneka (7) Grade ASTM N347 ou ASTM N683 commercialisé par la société Cabot (8) Huile MES « Catenex SNR » commercialisé par la société Shell (9) N-(1,3-diméthylbutyl)-N'-phényl-p-phénylènediamine « 6-PPD » de la société Flexsys (10) N-cyclohexyl-2-benzothiazol-sulfénamide « Santocure CBS » de la société Flexsys | | | | | |

**Tableau 2**

| Stratifié multicouches | A1/B1 témoin | A1/B2 | A1/B3 | A1/B4 | A1/B5 témoin |
|---|---|---|---|---|---|
| Performance adhésion (%) | 100 | 264 | 560 | 390 | 472 |

### VI-3-2. Exemple 2

Dans un deuxième temps, la composition thermoplastique A1, et les couches notées A4 et A5 précédemment ont été préparées, assemblées après cuisson des couches A4 et A5, et testées comme indiqué précédemment, les résultats d'adhésion sont présentés dans le tableau 3 ci-dessous. Pour comparaison, le stratifié témoin A1/B1 dans lequel la couche thermoplastique est associée à une couche diénique conventionnelle (c'est-à-dire ne comprenant pas du tout de TPE dans sa composition) est reporté dans le tableau 3 (base 100) bien qu'il soit préparé avant cuisson, puisque, vu la nature diénique pur de B1, une préparation post-cuisson ne permettrait pas d'obtenir d'adhésion.

**Tableau 3**

| Stratifié multicouches | A1/B1 témoin | A1/B4 | A1/B5 témoin |
|---|---|---|---|
| Performance adhésion (%) | 100 | 440 | 361 |

Les résultats présentés au tableau 4 mettent en évidence les excellents résultats en adhésion du stratifié selon l'invention, y compris après cuisson de la couche diénique. On note également que le témoin A1/B5 met en évidence qu'un taux de TPE de plus de 50 pce dans la couche dite diénique ne permet pas d'obtenir une adhésion aussi bonne qu'avec le stratifié de l'invention.

## Revendications

1. Stratifié élastomérique pour pneumatique, ledit stratifié comportant au moins deux couches superposées d'élastomère :
∘ une première couche, constituée d'une composition à base d'au moins un élastomère thermoplastique (TPE), le taux d'élastomère thermoplastique étant compris dans un domaine allant de plus de 50 à 100 pce (parties en poids pour 100 parties en poids d'élastomère) ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce ;
étant entendu qu'au moins 5 pce des élastomères thermoplastiques présents dans la deuxième couche sont compatibles avec au moins 5 pce des élastomères présents dans la première couche.

2. Stratifié selon la revendication 1, dans lequel la masse moléculaire moyenne en nombre des élastomères thermoplastiques est comprise entre 30 000 et 500 000 g/mol.

3. Stratifié selon l'une quelconque des revendications précédentes, dans lequel les blocs élastomères des élastomères thermoplastiques sont choisis parmi les élastomères ayant une température de transition vitreuse inférieure à 25°C.

4. Stratifié selon l'une quelconque des revendications précédentes dans lequel les blocs élastomères des élastomères thermoplastiques sont choisis dans le groupe constitué par les élastomères éthyléniques, les élastomères diéniques et leurs mélanges.

5. Stratifié selon l'une quelconque des revendications précédentes dans lequel les blocs élastomères des élastomères thermoplastiques sont choisis parmi les élastomères éthyléniques.

6. Stratifié selon l'une quelconque des revendications 1 à 5 dans lequel les blocs élastomères des élastomères thermoplastiques sont choisis parmi les élastomères diéniques.

7. Stratifié selon la revendication 6 dans lequel les blocs élastomères des élastomères thermoplastiques sont des élastomères diéniques issus de l'isoprène, du butadiène ou d'un mélange de ces derniers.

8. Stratifié selon l'une quelconque des revendications précédentes dans lequel les blocs thermoplastiques des élastomères thermoplastiques sont choisis parmi les polymères ayant une température de transition vitreuse supérieure à 60°C et, dans le cas d'un bloc thermoplastique semi cristallin, une température de fusion supérieure à 60°C.

9. Stratifié selon l'une quelconque des revendications précédentes dans lequel les blocs thermoplastiques des élastomères thermoplastiques sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

10. Stratifié selon l'une quelconque des revendications précédentes dans lequel les blocs thermoplastiques des élastomères thermoplastiques sont choisis parmi les polystyrènes.

11. Stratifié selon l'une quelconque des revendications précédentes dans lequel les élastomères thermoplastiques sont choisis dans le groupe constitué par les élastomères thermoplastiques copolymères styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS), styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS), styrène/ butadiène/ butylène (SBB), styrène/ butadiène/ butylène/ styrène (SBBS) et les mélanges de ces copolymères.

12. Stratifié selon l'une quelconque des revendications précédentes, dans lequel l'élastomère thermoplastique est le seul élastomère de la première couche.

13. Stratifié selon l'une quelconque des revendications précédentes, dans lequel la deuxième couche comprend une charge renforçante.

14. Pneumatique comportant un stratifié selon l'une quelconque des revendications précédentes.

15. Utilisation dans un objet pneumatique d'un stratifié selon l'une quelconque des revendications 1 à 13.

## Patentansprüche

1. Elastomeres Laminat für Reifen, wobei das Laminat mindestens zwei übereinanderliegende Schichten aus Elastomer umfasst:
∘ eine erste Schicht aus einer Zusammensetzung auf Basis mindestens eines thermoplastischen Elastomers (TPE), wobei der Gehalt an thermoplastischem Elastomer in einem Bereich von mehr als 50 bis 100 phe (Gewichtsteile pro 100 Gewichtsteile Elastomer) liegt;
∘ eine zweite Schicht aus einer Zusammensetzung auf Basis mindestens eines Dienelastomers, wobei der Gehalt an Dienelastomer in einem Bereich von mehr als 50 bis 95 phe liegt, und mindestens eines thermoplastischen Elastomers (TPE), wobei der Gehalt an thermoplastischem Elastomer in einem Bereich von 5 bis weniger als 50 phe liegt;
mit der Maßgabe, dass mindestens 5 phe der in der zweiten Schicht vorliegenden thermoplastischen Elastomere mit mindestens 5 phe der in der ersten Schicht vorliegenden Elastomere verträglich sind.

2. Laminat nach Anspruch 1, wobei die zahlenmittlere Molmasse der thermoplastischen Elastomere zwischen 30.000 und 500.000 g/mol liegt.

3. Laminat nach einem der vorhergehenden Ansprüche, wobei die Elastomerblöcke der thermoplastischen Elastomere aus Elastomeren mit einer Glasübergangstemperatur von weniger als 25°C ausgewählt sind.

4. Laminat nach einem der vorhergehenden Ansprüche, wobei die Elastomerblöcke der thermoplastischen Elastomere aus der Gruppe bestehend aus Ethylenelastomeren, Dienelastomeren und Mischungen davon ausgewählt sind.

5. Laminat nach einem der vorhergehenden Ansprüche, wobei die Elastomerblöcke der thermoplastischen Elastomere aus Ethylenelastomeren ausgewählt sind.

6. Laminat nach einem der Ansprüche 1 bis 5, wobei die Elastomerblöcke der thermoplastischen Elastomere aus Dienelastomeren ausgewählt sind.

7. Laminat nach Anspruch 6, wobei es sich bei den Elastomerblöcken der thermoplastischen Elastomere um Dienelastomere aus Isopren, Butadien oder einer Mischung davon handelt.

8. Laminat nach einem der vorhergehenden Ansprüche, wobei die thermoplastischen Blöcke der thermoplastischen Elastomere aus Polymeren mit einer Glasübergangstemperatur von mehr als 60°C und im Fall eines teilkristallinen thermoplastischen Blocks einem Schmelzpunkt von mehr als 60°C ausgewählt sind.

9. Laminat nach einem der vorhergehenden Ansprüche, wobei die thermoplastischen Blöcke der thermoplastischen Elastomere aus der Gruppe bestehend aus Polyolefinen, Polyurethanen, Polyamiden, Polyestern, Polyacetalen, Polyethern, Polyphenylensulfiden, Polyfluorverbindungen, Polystyrolen, Polycarbonaten, Polysulfonen, Polymethylmethacrylat, Polyetherimid, thermoplastisehen Copolymeren und Mischungen davon ausgewählt sind.

10. Laminat nach einem der vorhergehenden Ansprüche, wobei die thermoplastischen Blöcke der thermoplastischen Elastomere aus Polystyrolen ausgewählt sind.

11. Laminat nach einem der vorhergehenden Ansprüche, wobei die thermoplastischen Elastomere aus der Gruppe bestehend aus thermoplastischen Styrol/Ethylen/Butylen(SEB)-, Styrol/Ethylen/Propylen(SEP)-, Styrol/Ethylen/Ethylen/Propylen(SEEP)-, Styrol/Ethylen/Butylen/Styrol(SEBS)-, Styrol/Ethylen/Propylen/Styrol(SEPS)-, Styrol/Ethylen/Ethylen/Propylen/Styrol(SEEPS)-, Styrol/Isobutylen(SIB)-, Styrol/Isobutylen/Styrol(SIBS)-, Styrol/Butadien(SB)-, Styrol/Isopren(SI)-, Styrol/Butadien/Isopren(SBI)-, Styrol/Butadien/Styrol(SBS)-, Styrol/Isopren/Styrol(SIS)-, Styrol/Butadien/Isopren/Styrol(SBIS)-, Styrol/Butadien/Butylen(SBB)- und Styrol/Butadien/Butylen/Styrol(SBBS)-Copolymerelastomeren und Mischungen dieser Copolymere ausgewählt sind.

12. Laminat nach einem der vorhergehenden Ansprüche, wobei es sich bei dem thermoplastischen Elastomer um das einzige Elastomer der ersten Schicht handelt.

13. Laminat nach einem der vorhergehenden Ansprüche, wobei die zweite Schicht einen verstärkenden Füllstoff umfasst.

14. Reifen, umfassend ein Laminat nach einem der vorhergehenden Ansprüche.

15. Verwendung eines Laminats nach einem der Ansprüche 1 bis 13 in einem pneumatischen Objekt.

## Claims

1. Elastomeric laminate for tyres, the said laminate comprising at least two superimposed layers of elastomer:
∘ a first layer, composed of a composition based on at least one thermoplastic elastomer (TPE), the content of thermoplastic elastomer being within a range extending from more than 50 to 100 phr (parts by weight per 100 parts by weight of elastomer);
∘ a second layer, composed of a composition based on at least one diene elastomer, the content of diene elastomer being within a range extending from more than 50 to 95 phr, and on at least one thermoplastic elastomer (TPE), the content of thermoplastic elastomer being within a range extending from 5 to less than 50 phr;
it being understood that at least 5 phr of the thermoplastic elastomers present in the second layer are compatible with at least 5 phr of the elastomers present in the first layer.

2. Laminate according to Claim 1, in which the number-average molecular weight of the thermoplastic elastomers is between 30 000 and 500 000 g/mol.

3. Laminate according to either one of the preceding claims, in which the elastomer blocks of the thermoplastic elastomers are chosen from elastomers having a glass transition temperature of less than 25°C.

4. Laminate according to any one of the preceding claims, in which the elastomer blocks of the thermoplastic elastomers are selected from the group consisting of ethylene elastomers, diene elastomers and their mixtures.

5. Laminate according to any one of the preceding claims, in which the elastomer blocks of the thermoplastic elastomers are chosen from ethylene elastomers.

6. Laminate according to any one of Claims 1 to 5, in which the elastomer blocks of the thermoplastic elastomers are chosen from diene elastomers.

7. Laminate according to Claim 6, in which the elastomer blocks of the thermoplastic elastomers are diene elastomers resulting from isoprene, butadiene or a mixture of these.

8. Laminate according to any one of the preceding claims, in which the thermoplastic blocks of the thermoplastic elastomers are chosen from polymers having a glass transition temperature of greater than 60°C and, in the case of a semicrystalline thermoplastic block, a melting point of greater than 60°C.

9. Laminate according to any one of the preceding claims, in which the thermoplastic blocks of the thermoplastic elastomers are selected from the group consisting of polyolefins, polyurethanes, polyamides, polyesters, polyacetals, polyethers, polyphenylene sulphides, polyfluorinated compounds, polystyrenes, polycarbonates, polysulphones, polymethyl methacrylate, polyetherimide, thermoplastic copolymers and their mixtures.

10. Laminate according to any one of the preceding claims, in which the thermoplastic blocks of the thermoplastic elastomers are chosen from polystyrenes.

11. Laminate according to any one of the preceding claims, in which the thermoplastic elastomers are selected from the group consisting of styrene/ethylene/butylene (SEB), styrene/ethylene/ propylene (SEP), styrene/ethylene/ethylene/propylene (SEEP), styrene/ethylene/butylene/styrene (SEBS), styrene/ethylene/propylene/styrene (SEPS), styrene/ethylene/ethylene/propylene/styrene (SEEPS), styrene/isobutylene (SIB), styrene/isobutylene/styrene (SIBS), styrene/butadiene (SB), styrene/isoprene (SI), styrene/butadiene/isoprene (SBI), styrene/butadiene/ styrene (SBS), styrene/isoprene/styrene (SIS), styrene/butadiene/isoprene/styrene (SBIS), styrene/ butadiene/butylene (SBB) and styrene/butadiene/ butylene/styrene (SBBS) copolymer thermoplastic elastomers and the mixtures of these copolymers.

12. Laminate according to any one of the preceding claims, in which the thermoplastic elastomer is the only elastomer of the first layer.

13. Laminate according to any one of the preceding claims, in which the second layer comprises a reinforcing filler.

14. Tyre comprising a laminate according to any one of the preceding claims.

15. Use, in a pneumatic object, of a laminate according to any one of Claims 1 to 13.
